# EUROPÄISCHE PATENTSCHRIFT

(11) **EP 4 064 485 B1**
(45) Veröffentlichungstag und Bekanntmachung des Hinweises auf die Patenterteilung: **05.11.2025**
(21) Anmeldenummer: 22158521.9
(22) Anmeldetag: 24.02.2022
(51) Int. Cl.: H02G 7/18, E04G 21/32, H02G 1/04

(54) **VERBESSERTES SCHUTZGERÜST**
IMPROVED SCAFFOLDING
ÉCHAFAUDAGE À PROTECTION AMÉLIORÉE

(30) Priorität: 24.03.2021 DE 202021101561 U; 25.03.2021 DE 202021101575 U
(43) Veröffentlichungstag der Anmeldung: 28.09.2022
(73) Patentinhaber: Switalla, Hilarius, 44267 Dortmund (DE)
(72) Erfinder: Switalla, Hilarius, 44267 Dortmund (DE)
(74) Vertreter: Wittmann, Günther

(56) Entgegenhaltungen:
- EP-A1- 3 522 314
- EP-B1- 2 134 908
- DE-T2- 69 413 669
- US-A1- 2011 132 685
- ANONYMOUS: "Auff�llige Ger�ste an Stra�en im Kreis Starnberg: Was es damit auf sich hat", MERKUR.DE, 14 October 2020 (2020-10-14), pages 1 - 1, XP055948344, Retrieved from the Internet <URL:https://www.merkur.de/lokales/starnberg/starnberg-ort29487/leitungsarbeiten-netz-fuer-mehr-netz-90069509.html> [retrieved on 20220802]
- MICKLETHWAIT BRIAN: "Like a bridge but not a bridge", HTTP://WWW.BRIANMICKLETHWAIT.COM/, 6 December 2018 (2018-12-06), XP055948345, Retrieved from the Internet <URL:http://www.brianmicklethwait.com/index.php/weblog/comments/like_a_bridge_but_not_a_bridge/> [retrieved on 20220802]

## Beschreibung

Die vorliegende Erfindung betrifft ein verbessertes Schutzgerüst, wie es bei einem Neubau, Überholung und/oder Reparatur einer überirdischen von Masten gehaltenen Stromleitung verwendet wird, um sensible Infrastruktur, beispielsweise Straßen, Bahnlinien, andere Stromleitungen oder dergleichen vor herunterfallenden Kabeln zu schützen.

### Gebiet der Erfindung

Für eine sichere Energieübertragung ist ein leistungsfähiges Hochspannungs-Leitungsnetz erforderlich. Eine wichtige Rolle kommt bei Neubau von Stromtrassen oder Sanierung und Ersatzneubau bestehender Leitungen zu. Eine der Haupttätigkeiten dabei, sind Arbeiten an Montage von neuen Leitungsseilen oder deren Tausch. Die Stromleitungen kreuzen in Ihrem Verlauf wichtige Infrastruktur, beispielweise Autobahnen, Bahnstrecken, andere Hochspannungsleitungen, sowie unterschiedliche Straßen unterschiedlichen Ranges und viele andere Örtlichkeiten.

Beim eigentlichen Arbeitsvorgang des Leitungseiltausches (Seilzuges) besteht immer die Gefahr, dass es aufgrund von unvorhersehbaren bzw. unerwarteten Ereignissen (materialtechnischer Natur, technischem oder menschlichem Versagens) zum Herunterfallen der gezogenen Leitungseile und somit zur Gefährdung des Verkehr am Boden kommen kann.

Um dieser Gefahr vorzubeugen, werden direkt in den gefährdeten Zonen spezielle, nach statischen Vorgaben gebaute Sondergerüst-Konstruktionen mit Netzeindeckung von entsprechender Höhe gebaut, die auch als Schutzgerüst bezeichnet werden. Beispielsweise werden auf beiden Seiten der Straße direkt unter der den gezogenen Leitungsseilen gegenüberliegende Gerüstwände aufgestellt.

Zwischen diesen werden Seile gespannt, und anschließend an diesen Seilen Schutznetze aufgehängt.

### Stand der Technik

Die heutigen, hohen Anforderungen an die Stromübertragungsleistung erfordern den Einsatz von immer stärkeren uns somit schwereren Leitungsseilen, die während des Seilziehens das Auftreten immer größeren Lasten und Kräfte nach sich ziehen. Ebenso steigen die dynamischen Belastungen für die Schutzgerüste bzw. Schutzgerüste deutlich. Das ist besonders der Fall beim Bündelseilzug, bei dem über ein einzelnes Zugseil zwei bis vier zu einem Bündel verschraubten Leitungsseile miteinander verbunden mittels eines sogenannten Teppichs gezogen werden. Der sogenannte Teppich weist im Schnitt eine Breite von etwa 50 cm bis etwa 60 cm auf und umfasst eine etwa 150 kg schwere Verbindungsstelle vom ziehenden Seil und den zum Bündel verbundenen gezogenen mehreren Seilen, beispielsweise zwei bis vier Seile.

Die relative Masse der gebündelten Leitungsseile beträgt in der Regel von etwa 5 kg/m, die relative Masse eines Zweierbündel Leitungsseile beträgt bis etwa 10 kg/m und die relative Masse eines Viererbündel Leitungsseile beträgt bis etwa 20 kg/m. Das ergibt eine Masse der Leitungsseile in einem Mastfeld mit einem Mastabstand von ca. 500 m von etwa 5 t.

Die zu montierenden Leitungsseile werden in einer Höhe von durchschnittlich 5 m bis 10 m über dem Schutzgerüst und mit einer Zugkraft von durchschnittlich etwa 5 t bei einem Zweierbündel Leitungsseile und etwa 10 t bis 12 t bei einem Viererbündel Leitungsseile gezogen. Die Wirkung dieser Kräfte zusammen stellt eine extreme dynamische Belastung für die Gerüstkonstruktion und die Schutznetze im unwahrscheinlichen Fall eines Fehlers dar.

Ein zusätzlicher großer Risikofaktor ist bei einem Riss des Zugseiles beim BündelSeilzug die extreme dynamische Einwirkung des "Teppichs" auf die Netze und somit eine akute Gefährdung des zu schützenden Bereiches, sollte der Teppich das Netz durchschlagen.

Folglich muss das Schutzgerüst ausreichend Schutz bieten, das gerissene, niederfallende Seil mit seinem dynamischen Verhalten aufzufangen, wobei sich das havarierte Leitungsseil auf der Distanz zwischen zwei Hochspannungsmasten gleichzeitig über eine gewisse Distanz (in der Regel etwa 500 m) erstreckt.

Die wichtigste Eigenschaft der Schutzgerüste beim Schutz des darunter liegenden Bereichs ist, dass die gesamte Gerüstkonstruktion im Betriebsfall selbst unter der extremen Belastung nachdem die Netze die herunterfallenden Bündel aufgenommen haben, nicht nachgibt und dadurch die definierten Sicherheitsabstände nach unten nicht unterschritten werden oder sogar ein Bündel, Seile, der Teppich oder dergleichen auf das kreuzende Objekt herunterfällt. Dies kann besonders bei kreuzenden und unter Betrieb stehenden Hochspannungsleitungen und elektrifizierten Bahnstrecken der Fall sein, wo selbst das Unterschreiten der Sicherheitsabstandes von etwa 4 m ohne direkten Kontakt die Aufnahme der Induktionsspannung durch die Leitungsseile bedeuten würde. Dadurch würden alle im Seilzugfeld sich befindenden beteiligten Objekte, wie das Gerüstbauwerk, Hochspannungsmasten, Arbeitsgeräte etc. im Seilzugabschnitt unter Spannung gesetzt werden und dadurch würde eine extrem hohe Lebensgefahr für die an den Arbeiten beteiligten Menschen entstehen.

Das gleiche gilt für Autobahnen und Straßen, wo das plötzliche Herunterfahlen der querenden, gezogenen Leitungsseile automatisch akute Lebensgefahr bedeuten würde.

Die beim Seilzug gestiegenen Anforderungen an die Betriebssicherheit der Schutzgerüste und Netze, vor allem beim Querung von Hochspannungsleitungen, Bahnstrecken, Autobahnen und Bundesstraßen mit Netz-Spannweiten bis zu etwa 120 Metern erfordern sind mittels des erfindungsgemäßen verbesserten Schutzgerüstes zu erfüllen.

Es gibt keine definierten Standards bzw. Kriterien, die erlauben würden, die es erlauben würden die Risiken zu bestimmen. Es sind ferner keine praxistauglichen Verfahren bekannt, die im vorliegenden Anwendungsgebiet zur Zusicherung/Bestimmung von Belastungen beim Bündelriss und Einwirkung der dabei auftretenden mechanischen Kräfte auf das Schutzgerüst in Frage kämen.

Die nachfolgend offenbarte Erfindung erlaubt die Risiken weitestgehend zu begrenzen und stellt eine Ausganggrundlage dar, auf deren Basis der Schutz weiter optimiert werden kann.

Die DE 69 413 669 T2 offenbart ein Gerüst, das ein beabstandetes Paar von Säulen und Verbindungsmittel (aufweist, wobei jede Säule auf einer transportablen Basis so angebracht ist, dass sie relativ zu dieser schwenkbar ist, und die Verbindungsmittel an jeder Säule des Säulenpaars befestigt werden können, wenn diese im allgemeinen vertikal sind, um sich zwischen diesen zu erstrecken, dadurch gekennzeichnet, dass jede Säule relativ zu der Basis von einer im allgemeinen horizontalen Ausrichtung zu einer im allgemein vertikalen Ausrichtung schwenkbar ist. Ein Sicherheitsnetz ist zwischen zwei Säulenpaaren ist ein Sicherheitsnetz an einem oberen Gitterabschnitt angeordnet, der zwischen zwei Säulen angeordnet ist.

Die EP 3 522 314 A1 betrifft Schutzgerüst, zumindest umfassend zwei langestreckte Turmelemente; ein langgestrecktes Obergurtelement, dass zwischen den beiden Turmele-menten angeordnet und endseitig jeweils an einem der beiden Turmelemente zur Bereitstellung eines Gerüstportals befestigt ist, wobei beide Turmelemente jeweils im Bereich ihres, dem Obergurtelement abgewandten Längsendabschnitt mit einem zugeordneten Standelement mittels einer Verbindungseinrichtung verbunden sind, und beide Standelemente jeweils eine Standflache zum Abstützen an einem Untergrund aufweisen.

Die US 2011/0132685 A1 offenbart einen Gerüstseitenrahmen mit mindestens einem sich im allgemeinen horizontal erstreckendes Rohr, ein Paar sich vertikal erstreckende Seitenrohre, die von dem horizontalen Rohr herabhängen, und vier Befestigungselementen, eines neben jeder Ecke des Rahmens, zum Befestigen des Seitenrahmens an einem jeweiligen benachbarten Strukturelement einer zugehörigen Gerüststruktur, so dass der obere Teil des Seitenrahmens ein Sicherheitsgeländer für einen Bediener bildet, der auf einer Stützplattform einer gegebenen Ebene einer Gerüststruktur steht, und der untere Teil des Seitenrahmens sich unter die Stützplattform der gegebenen Ebene der Gerüststruktur erstreckt. Die beiden unteren Befestigungselemente sind hakenförmig und die Haken haben eine Befestigungsklinke.

Die EP 2 134 908 B1 offenbart einen geschlossenen Vertikalrahmen, der wenigstens zwei parallele Vertikalstutzen, die in einem Horizontalabstand zueinander angeordnet sind und die jeweils ein oberes Ende und ein unteres Ende aufweisen umfasst und wenigstens zwei parallele Horizontalarme, die in einem Vertikalabstand zueinander angeordnet sind und die sich jeweils zwischen den wenigstens zwei Vertikalstutzen quer zu diesen Vertikalstutzen erstrecken umfasst.

### Allgemeine Beschreibung der Erfindung

Die Aufgabe der Erfindung wird durch ein Schutzgerüst nach Anspruch 1 gelöst. Die abhängigen Ansprüche beanspruchen bevorzugte Ausführungsformen.

Die Erfindung offenbart ein Schutzgerüst, das zum Schutz von Objekten unterhalb einer Stromleitung während Arbeiten an der Stromleitung ausgebildet ist. Die Arbeiten können eine Montage, eine Reparatur, eine Erwartung, eine Instandsetzung oder dergleichen der Stromleitung umfassen. Das Schutzgerüst umfasst einen ersten Gerüstabschnitt mit einer Mehrzahl vertikal angeordnete Stützen, die in Längsrichtung des ersten Gerüstabschnittes und in Querrichtung des ersten Gerüstabschnittes parallel zueinander und voneinander beabstandet angeordnet sind. Der erste Gerüstabschnitt umfasst eine Mehrzahl horizontaler Balken, die die vertikalen Stützen verbinden und parallel zueinander und voneinander beabstandet angeordnet sind. Erfindungsgemäß weist zumindest ein oberster Balken eine höhere mechanische Festigkeit als die durchschnittliche mechanische Festigkeit der darunterliegenden Balken auf. Dadurch kann der oberste Balken eine höhere Last aufnehmen, falls ein Kabel, ein Seil, ein Teppich oder ein anderes Objekt auf das Schutzgerüst fällt.

Das Schutzgerüst umfasst einen zweiten Gerüstabschnitt mit einer Mehrzahl vertikal angeordnete Stützen, die in Längsrichtung des zweiten Gerüstabschnittes und in Querrichtung des zweiten Gerüstabschnittes parallel zueinander und voneinander beabstandet angeordnet sind. Der zweite Gerüstabschnitt umfasst eine Mehrzahl horizontaler Balken, die die vertikalen Stützen verbinden und parallel zueinander und voneinander beabstandet angeordnet sind. Zumindest ein oberster Balken weist eine höhere mechanische Festigkeit als die durchschnittliche mechanische Festigkeit der darunterliegenden Balken auf. Der zweite Gerüstabschnitt kann beabstandet und parallel zum ersten Gerüstabschnitt angeordnet sein.

Bei einer Ausführungsform können die beiden obersten Balken eine höhere mechanische Festigkeit als die durchschnittliche mechanische Festigkeit der darunterliegenden Balken aufweisen.

Die höhere mechanische Festigkeit kann zumindest 25 %, vorzugsweise zumindest 50 %, mehr bevorzugt zumindest 100 %, noch mehr bevorzugt zumindest 200 % höher als die durchschnittliche mechanische Festigkeit sein.

Der Ausdruck "höhere mechanische Festigkeit" und der Ausdruck "durchschnittliche mechanische Festigkeit" umfassen zumindest das Zugmodul, das Elastizitätsmodul und/oder die Bruchlast.

Bei einer Ausführungsform kann der zumindest eine Balken mit höherer mechanischer Festigkeit einen größeren Querschnitt als die Balken mit durchschnittlicher mechanischer Festigkeit aufweisen.

Der Balken mit einer höheren mechanischen Festigkeit kann ein verstärkter Rohriegel sein.

Das Schutzgerüst kann bei einer Ausführungsform ein Sicherungsseil aufweisen, das großteils unter dem obersten Balken mit höherer mechanischer Festigkeit angeordnet ist. Das Sicherungsseil kann an den Enden des obersten Balken mit höherer mechanischer Festigkeit befestigt sein und/oder an den Stützen befestigt sein, an denen der oberste Balken mit höherer mechanischer Festigkeit befestigt ist. Das Sicherungsseil erzielt eine zusätzliche mechanische Verzögerung eines herabfallenden Objektes, falls der oberste Balken mit der höheren mechanischen Festigkeit durch das herabfallende Objekte deformiert wird.

Der erste Gerüstabschnitt und der zweite Gerüstabschnitt können so angeordnet sein, dass der zumindest eine Balken mit höherer mechanischer Festigkeit des ersten Gerüstabschnittes und der zumindest eine Balken mit höherer mechanischer Festigkeit des zweiten Gerüstabschnittes gegenüber voneinander angeordnet sind. Zwischen dem ersten Gerüstabschnitt und dem zweiten Gerüstabschnitt kann sich das zu schützende Objekt, beispielsweise ein Verkehrsweg, befinden.

Zwischen dem zumindest einen obersten Balken mit höherer mechanischer Festigkeit des ersten Abschnittes und dem zumindest einen obersten Balken mit höherer mechanischer Festigkeit des zweiten Gerüstabschnittes ist ein erstes Netz gespannt. Zusätzlich ist zwischen dem zumindest einen zweit obersten Balken des ersten Gerüstabschnittes und dem zumindest einen zweit obersten Balken des zweiten Gerüstabschnittes ein zweites Netz gespannt. Dadurch wird der Schutz der tieferliegenden Infrastruktur durch herabfallende Objekte weiter verbessert.

Die Erfindung umfasst mehrere innovative bauliche Sicherungen, die in ihrer zusammenhängenden Wirkung, es ermöglichen, enorme Lasten die bei eventuellem Riss eines oder mehrerer gebündelter Seile während des Bündelseilzugs über Hochspannungsmaste in einem Arbeitsabschnitt sicher aufzufangen.

Die Verformung der Gerüstkonstruktion somit das Risiko des Durchschlagens wird im erheblichen Maße begrenzt bzw. gänzlich ausgeschlossen, um das damit verbundene das Absenken der Netzseile zu verhindern. So wird die vorgesehene Betriebshöhe eingehalten auch dann, wenn das Kabelbündel bzw. Seilbündel im Falle eines Unfalls auf dem Gerüstbauwerk aufliegt.

Neuartige, zusätzliche Verstärkungsmaßnahmen an den tragenden Gerüstwänden, wie Anwendung von speziell angefertigten Auffangseilen, die an der Gerüstfront oben, an den nebeneinander stehenden Stielen, im jedem Gerüstfeld im unmittelbaren Einschlagbereich montiert werden, beugen in höchsten Maße der Gefahr des Durchschlagens. Die statisch geprüften Auffangseile haben die Aufgabe, die dynamische Belastung beim Bündelriss zusätzlich aufzufangen und die Kräfte in die Breite abzuleiten, um die punktuelle Schlageinwirkung zu minimieren. Damit wird erreicht, dass der betroffene Bereich in der Gerüstwand minimal bzw. nicht nachgibt und die Neigung der Gerüstwände nach innen verhindert wird. Die zwischen den Gerüstwänden gespannten Netze tragenden Seile bleiben dadurch auf ihrer voreingestellten Höhe und sich nicht hin in den kritischen Bereich absenken. Die bekannten Konstruktionen werden bisher auch wegen der niedrigeren Kosten angewandt.

Die bisher angewandten Bauweisen zum Schutz von Objekten sind aufgrund des schwer einschätzbaren dynamischen Verhaltens des Seil-Bündels und daraus resultierenden Folgen hinsichtlich des Durchschlagend des Netzes und Verformung der tragenden Gerüstwände nicht ausreichend.

Diese Belastungen bedeuten das Auftreten enormer Probleme für die Arbeitssicherheit beim Seilzug wie nachfolgend erläutert wird. Die lagigen Riegel in verstärkter Ausführung, die zwischen den Stielen montierten speziellen, statisch geprüften Auffangseile haben die Aufgabe, die Dynamik des herunterfallenden Bündels abzufangen und die dabei auftretenden Spitzenbelastungen in die Fläche abzuleiten. Die Verformung der Gerüstwände wird weitgehend dadurch verhindert. Infolge dessen wird das Absenken der Netz-Tragseile verhindert und das ins Netz gefallene Bündel in sicherer Höhe bis zum Stillzustand bleibt.

So kann aufgrund der bereits im Vorfeld berechneten verstärkten Eigenschaften der Gerüstwände praktisch ausgeschlossen werden, dass der Bereich unten in der zu schützenden Zone direkt gefährdet wird. Das ist vor allem bei kreuzenden Hochspannungsleitungen und Bahnleitungen extrem wichtig, da der direkte Kontakt der gezogenen Seile mit oder bereits das Unterschreiten der Mindest-Sicherheitsabstände zu den kreuzenden Hochspannungsleitungen die Aufnahme der Induktionsspannung durch die heruntergefallenen Seile zur Folge hat. Die heruntergefallenen Seile würden so den gesamten Arbeitsbereich im Seilzug-Streckenabschnitt unter Spannung setzen. Das bedeutet direkte Lebensgefahr für alle in dem Bereich tätigen Mitarbeiter.

Der zusätzliche Schutz wird durch Einbau von zwei Schutznetzebenen untereinander, in einem Abstand von 0,5 bis 2 Metern, jeweils nach Gegebenheiten am Gerüststandort erreicht. Die obere Netzebene hat die Funktion primär die dynamischen Durchschlag-Kräfte beim Herunterfallen eines Seil-Bündels mit dem Teppich aufzunehmen und das Bündel aufzufangen. Die untere Netzebene hat die Funktion die verbleibenden dynamischen Durchschlagkräfte sicher aufzunehmen. Sollte der Zieh-Teppich durch das obere Netz nach unten durchfallen, wird er vom unteren Netz aufgefangen.

### Kurze Beschreibung der Figuren

Die Erfindung wir anschließend unter Bezugnahme auf nicht beschränkende Ausführungsformen detaillierter erläutert, wobei
Figuren 1 bis 2 eine allgemeine Ausführungsform der Erfindung darstellen;
Figuren 3 und 4 eine erste Ausführungsform der Erfindung offenbaren; und
Figuren 5 bis 9 eine zweite Ausführungsform der Erfindung offenbaren.

### Detaillierte Beschreibung der Figuren

Ausführungsformen eines erfindungsgemäßen Schleif- und Schutzgerüstes 100 mit Netzeindeckung bestehend aus zusätzlichen horizontaler Verstärkung 206, 208 des Gerüstwände und mit zwei Netzebenen 190, 192 untereinander.

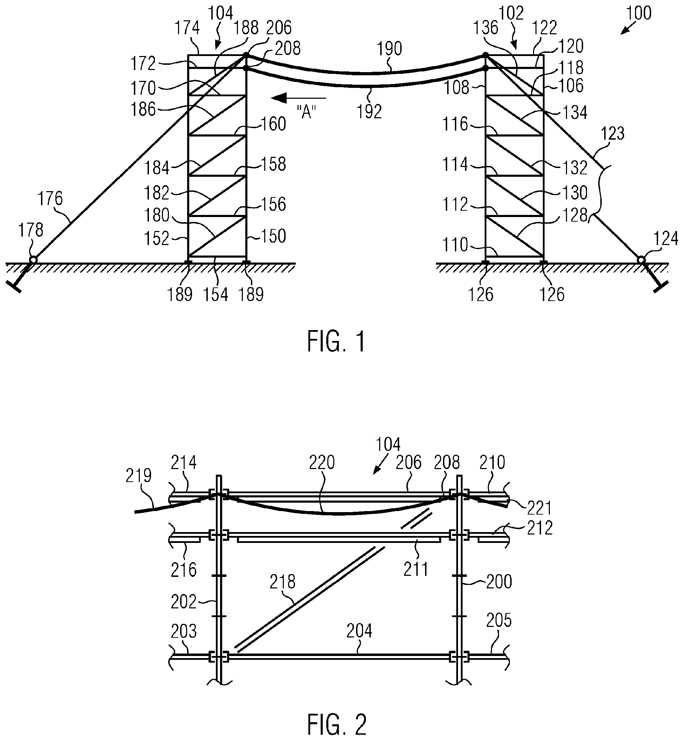

Die Erfindung wird nun allgemein unter Bezugnahme auf Figuren 1 und 2 beschrieben. Figur 1 zeigt ein Schutzgerüst 100 mit einem ersten Schutzgerüstabschnitt 102 und einem zweiten Schutzgerüstabschnitt 104. Der erste Schutzgerüstabschnitt 102 umfasst vertikale Stützen 106,108, die parallel zueinander und beabstandet zueinander angeordnet sind. Hinter den vertikalen Stützen 106, 108 befinden sich weitere vertikale Stützen, die zum Zwecke der Übersichtlichkeit nicht dargestellt sind. Zwischen den vertikalen Stützen sind eine Mehrzahl horizontaler Riegel (Balken) 110, 112, 114, 116, 118, 120, 122 angeordnet, die jeweils an den vertikalen Streben 106, 108 befestigt sind. Zwischen den vertikalen Stützen 106,108 sind Diagonalstreben 128,130,132,134,136 angeordnet, die jeweils zwischen zwei horizontalen Balken 110, 112, 114, 116, 118, 120, 122 angeordnet sind. Der erste Schutzgerüstabschnitt versteht auf Füßen 126 auf dem Boden. Der erste Gerüstabschnitt 102 wird mittels eines Seils 123 verspannt, das mittels eines Erdnagels 124 am Boden befestigt ist.

Der zweite Schutzgerüstabschnitt 104 umfasst vertikale Stützen 150, 152, die mittels einer Mehrzahl horizontaler Balken 154, 156, 158, 160, 170, 172, 174, sowie einer Mehrzahl Diagonalstreben 180, 182, 184, 186, 188 verbunden bzw. befestigt sind. Die Diagonalstreben verlaufen jeweils zwischen zwei horizontalen Balken 154,156, 158, 160, 170, 172, 174. Der zweite Gerüstabschnitt 104 wird mittels Füßen 189 vom Boden abgestützt. Ferner wird der zweite Schutzgerüstabschnitt 104 mittels eines Seil 176 abgestützt, das mittels eines geeigneten Befestigungselementes, beispielsweise eines Erdnagels 178 am Boden befestigt ist.

Es wird auf Figur 2 Bezug genommen, die die Frontalansicht A auf den zweiten Schutzgerüstabschnitt vom Zwischenraum zwischen dem ersten Schutzgerüstabschnitt 102 und dem zweiten Schutzgerüstabschnitt 104 zeigt. Zwei vertikalen Stützen 200, 202 werden von unteren Balken 203, 204, 205 etc. gestützt. Es versteht sich, dass Figur 2 lediglich den oberen Abschnitt eines Teils des zweiten Schutzgerüstabschnittes 104 zeigt.

Ferner umfasst der Schutzgerüstabschnitt 104 eine Mehrzahl obere Balken 206, 210, 214, die jeweils zwischen zwei Stützen 200, 202 angeordnet sind. Der obere Balken 206, 210, 214 ist verstärkt ausgebildet und weist eine höhere mechanische Festigkeit als andere Balken 154, 156, 158, 160, 170, 172, 174, 203, 204, 205 auf. Der obere Balken 206, 210, 214 mit einer höheren mechanischen Festigkeit kann ein verstärkter Rohriegel sein. Der Ausdruck "höhere mechanische Festigkeit" und der Ausdruck "durchschnittliche mechanische Festigkeit" können zumindest das Zugmodul, das Elastizitätsmodul und/oder die Bruchlast umfassen. Bei einer Ausführungsform kann der zumindest eine Balken mit höherer mechanischer Festigkeit einen größeren Querschnitt als die Balken mit durchschnittlicher mechanischer Festigkeit aufweisen.

Wie die obersten Balken 206, 208, 214 weisen die zweit oberen Balken 211, 212, 216 eine höhere mechanische Festigkeit eine höhere mechanische Festigkeit als andere Balken 154, 156, 158, 160, 170, 172, 174, 203, 204, 205 auf. Der zweit oberen Balken 211, 212, 216 mit einer höheren mechanischen Festigkeit können verstärkte Rohriegel sein. Der Ausdruck "höhere mechanische Festigkeit" und der Ausdruck "durchschnittliche mechanische Festigkeit" können zumindest das Zugmodul, das Elastizitätsmodul und/oder die Bruchlast umfassen. Bei einer Ausführungsform kann der zumindest eine Balken mit höherer mechanischer Festigkeit einen größeren Querschnitt als die Balken mit durchschnittlicher mechanischer Festigkeit aufweisen.

Zwischen dem zumindest einen obersten Balken mit höherer mechanischer Festigkeit des ersten Gerüstabschnittes 102 und dem zumindest eine obersten Balken 206 mit höherer mechanischer Festigkeit des zweiten Gerüstabschnittes 104 ist ein erstes Netz 190 vorgespannt, und zwischen dem zumindest einen zweit obersten Balken des ersten Gerüstabschnittes 102 und dem zumindest einen zweit obersten Balken 208 des zweiten Gerüstabschnittes 104 ist ein zweites Netz 192 vorgespannt. Das obere erste Netz 190 hat die Funktion primär die dynamischen Durchschlagkräfte beim Herunterfallen eines Seil-Bündels mit dem Teppich aufzunehmen und das Bündel aufzufangen. Das untere zweite Netz 192 hat die Funktion die verbleibenden dynamischen Durchschlagkräfte sicher aufzunehmen. Sollte der Ziehteppich durch das obere Netz nach unten durchfallen, wird er vom unteren Netz aufgefangen. Das erste Netz 190 und zweite Netz 192 haben einen Abstand von etwa 0,5 m bis etwa 2 m.

Der Abstand zwischen horizontalen Balken kann etwa 2 m und der Abstand zwischen vertikalen Stützen kann etwa 3 m betragen.

Ein Sicherungsseil 219, 220, 221, das großteils unter dem obersten Balken 214, 220, 210 mit höherer mechanischer Festigkeit angeordnet ist und an den Enden des obersten Balken 214, 220, 210 mit höherer mechanischer Festigkeit befestigt ist und/oder an den Stützen 200, 202 befestigt ist, an denen der oberste Balken Balken 214, 220, 210 mit höherer mechanischer Festigkeit befestigt ist verleiht der Gerüstkonstruktion im Fall des Absturzes von Leitungsteilen oder Montageteilen zusätzliche Stabilität. Bei einer unerwartet großen Deformation des obersten Balken wird die verbleibende kinetische und potentielle Energie aufgrund des Absturzes von Leitungsteilen oder Montageteilen in das Sicherungsseil 219, 220, 221 geleitet. Als zusätzliches Sicherungselement fungiert der zweit obere Balken 208, 212, 216, um auch extreme Spitzenlasten aufzunehmen.

Die Erfindung stellt eine horizontale Verstärkung der Gerüstwände bereit. Der zusätzliche Schutz wird erreicht durch Einbau von speziellen, statisch geprüften Auffangseilen die zusätzlich horizontal oben, längs in die Gerüstwand-Konstruktionen eingebaut werden. Der Schutz wird erreicht durch Einbau von Verstärkungen mit Schwerlastriegeln die zusätzlich horizontal oben, längs, auf drei Ebenen in Abstand von 0,5 bis 2 Metern in die Gerüstwand-Konstruktionen eingebaut werden.

Die Erfindung schlägt ferne Schutznetze zur Verstärkung der Konstruktion bereit. Der zusätzliche Schutz wird erreicht, durch Einbau von zwei Schutznetzen untereinander, in einem Abstand von 1 bis 2 Metern, die jeweils nach Gegebenheiten am Gerüststandort eingebaut werden. Das obere Netz 190 hat die Funktion primär die dynamischen Durchschlagkräfte beim Herunterfallen eines Seilbündels mit dem Teppich aufzunehmen und das Bündel aufzufangen. Das untere Netz 192 hat die Funktion die verbleibenden dynamischen Durchschlagkräfte sicher aufzunehmen. Sollte der Zieh-Teppich durch das oberen Netz 190 nach unten durchfallen, wird er letztendlich vom unteren Net 192 sicher aufzufangen.

Im Folgenden schließen sich die Offenbarung weitere Ausführungsformen an.

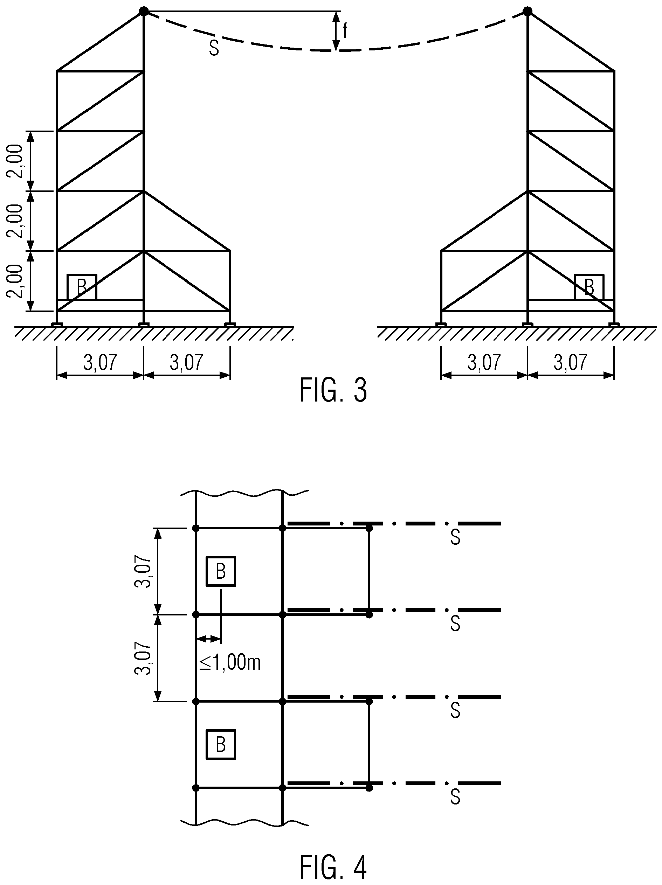

Bei der ersten Ausführungsform gemäß Figuren 3 und 4 werden jeweils gegenüber Tragwände mit Verstärkung aufgestellt, zwischen den an deren oberen Teil, Schutznetze in zwei Ebenen untereinander befestigt werden.

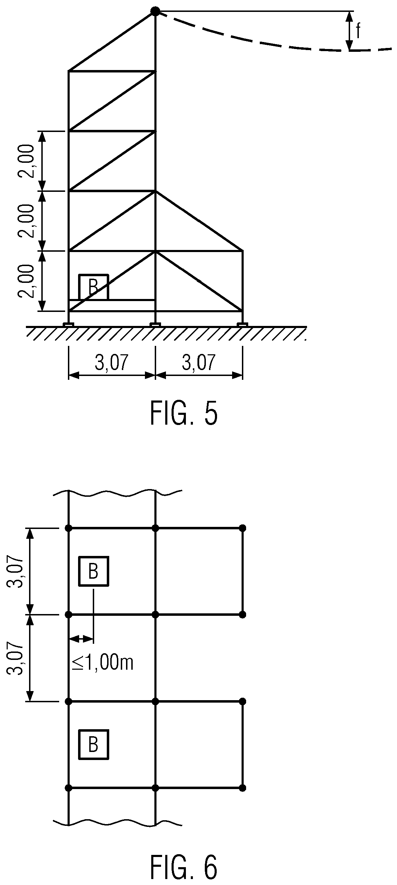

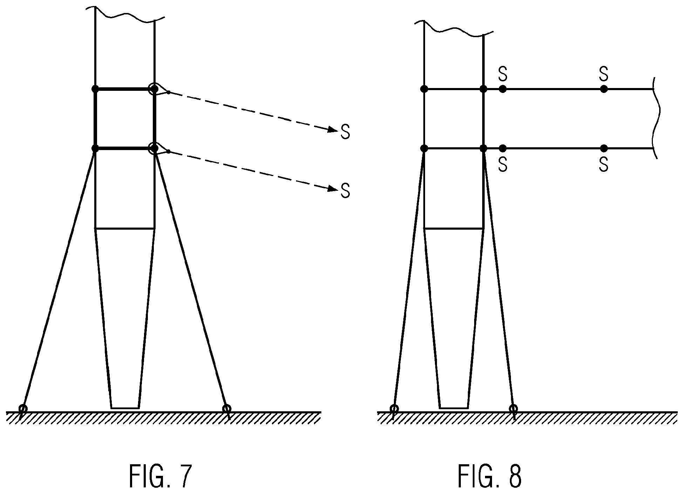

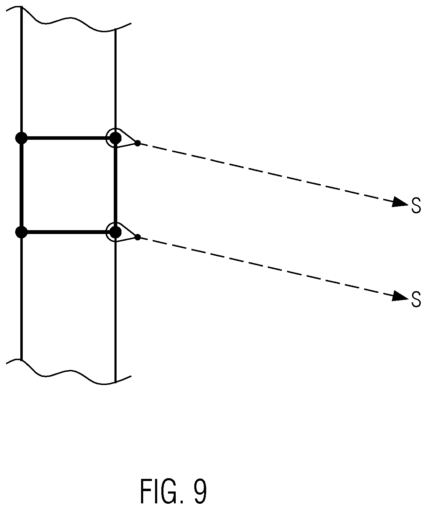

Bei der zweiten Ausführungsform gemäß Figuren 5 bis 9 werden jeweils gegenüberliegend Tragwände aufgestellt, zwischen den, an deren oberen Teil, Schutznetze in zwei Ebenen untereinander befestigt werden.

Beim Aufbau des erfindungsgemäßen Gerüstes, unabhängig von der jeweiligen Ausführungsform, werden die einzelnen Komponenten der Gerüstwände in Einzelteilen oder auch teilweise vormontiert zum vorgesehenen Aufbauort transportiert.

Die erste Ausführungsform eines erfindungsgemäßen Schleif- und Schutzgerüsts ist aus Gerüstmaterial, z.B aus Layher-Allround, Peri, Plettac, zusätzlich ergänzt mit erfindungsgemäßen technischen Maßnahmen ausgebildet. Diese Ausführungsform eines erfindungsgemäßen Schleif- und Schutzgerüsts mit Netzeindeckung bestehend aus zwei Netzen untereinander. Die tragenden Wände des Schutzgerüstes werden in dieser Variante aus am Markt zugänglichen Gerüstbauelementen hergestellt, insbesondere nach Art von oder aus Gerüstbauteilen, wie sie von den Herstellern in ihren Produktreihen, wie zum Beispiel "Layher - Allround", "PERI - UP Rosett Modulgerüst", "ALTRAD 20 plettac-alsco-Modulgerüst", oder von anderen Herstellern wie Rux, Hünnebeck etc. angeboten werden.

Die zweite Ausführungsform gemäß Figuren 5 bis 9 offenbart eine erfindungsgemäßen Schleif- und Schutzgerüsts aus Viereckgitterträger aus Winkel- oder Rohrprofilen, z.B aus Notgestängen, Netzeindeckung mit zwei Netz untereinander. Die tragenden Wände des Schutzgerüstes werden in dieser Variante aus eigens dafür produzierten oder in der Art ähnlichen und am Markt zugänglichen Elementen hergestellt, insbesondere nach Art von oder aus Viereckgitterträgen aus Winkel- beziehungsweise Rohrprofilen oder Notgestängen, wie sie von den Herstellern in ihren Produktreihen, wie zum Beispiel von den Notgestänge Herstellern etc. angeboten werden.

Bei beiden Ausführungsformen werden jeweils gegenüber Tragwände (Schutzgerüstabschnitte) aufgestellt, an und zwischen denen im oberen Teil, Schutznetze auf zwei Höhen untereinander befestigt werden.

Bei der ersten Ausführungsform werden den jeweiligen Gegebenheiten vor Ort entsprechend angepasst zwei gegenüberliegenden Gerüstwand-Konstruktionen (Schutzgerüstabschnitte) aus am Markt zugänglichen Gerüstbauelementen aufgebaut, insbesondere nach Art von oder aus Gerüstbauteilen, wie sie von den Herstellern in ihren Produktreihen, wie zum Beispiel "Layher - Allround", "PERI - UP Rosett Modulgerüst", "ALTRAD 20 plettac-alsco-Modulgerüst", oder von anderen Herstellern wie Rux, Hünnebeck etc. angeboten werden.

Die Gerüstwand-Konstruktionen (Schutzgerüstabschnitte) werden mit Stahlseilen zur Sicherung gegen Umkippen stabilisiert. Das eine Ende der Steilseile wird oben an der Gerüstwand befestigt. Das andere Ende der Stahlseile wird unten an davor in den Boden eingeschraubten Drehankern aus Stahl befestigt. Sollte vor Ort aus technischen Gründen (Versorgungsleitungen) das Eindrehen der Schraubanker nicht möglich sein, werden Ballaststeine B verwendet an den die Stahlseile unten montiert werden. Ersatzweise können die Ballaststeine nach Vorgaben der Statik innen in die Gerüstwand-Konstruktion angebracht werden.

In die jeweilige davor erstellte Gerüstwand werden oben an deren Front, horizontal verstärkten Riegel, Schwerlastriegel, Balken mit erhöhter mechanischer Festigkeit in Ebenen untereinander im Abstand von 0,5 m bis 2 m eingebaut.

Zusätzlich werden in jedem Feld, auf der obersten Riegelebene, entlang der gesamten Länge des Gerüstes, speziell angefertigte, statisch geprüfte Seile (Seile an deren Ende mit jeweils zwei Schlaufen) auf die aufeinanderfolgenden Stiele (Stützen) montiert, indem die Enden des jeweiligen Seiles oben über die einzelnen Stiele (Stützen) übergestülpt werden. Zusätzlich werden die Seile in deren parallelen Verlauf mittels Gerüstkupplungen an den Schwerlastriegeln eingeklemmt, bzw. befestigt.

Der oberste starre Riegel bzw. Balken erhöhter mechanischen Festigkeit soll den Haupteinschlag von oben und die Schleifeinwirkung (Sägeeffekt) der sich anschließend seitwärts bewegenden und heruntergefallenden Seile aufnehmen. Die auf der obersten Ebene montierten Seile sollen bei Verbiegung und im angenommenen Fall des Durchsägens der obersten Riegel die Belastung durch deren flexible Eigenschaft letztendlich aufnehmen und die Masse bzw. deren Energie zum Stillstand zu bringen.

Die unteren zwei Verstärkungsebenen bleiben dadurch unbeschädigt und die Gerüstwand wird sich dann nicht weiter verformen somit können dann, die zum Stillstand gekommene Last oben aufnehmen, die dann darauf ruht. Zwischen den zuvor erstellten Gerüstwandkonstruktionen (Schutzgerüstabschnitte) werden oben analog zu den gegenüber liegenden Stielen (Stützen) auf zwei Ebenen Netz-Tragseile (aus Stahl oder aus GFK-Material, genannt "Parafilseile") gespannt und deren Enden werden an den vorgesehenen Stellen in der jeweiligen Gerüstwandkonstruktion befestigt. Die Montage der Netz-Tragseile erfolgt im Zuge einer Straßensperrung oder zeitweisen Abschaltung der kreuzenden Hochspannungsleitungen.

Zur Montage der Netz-Tragseile werden oben, auf beiden Gerüstwänden (Gerüstwand-A und Gerüstwand-B jeweils zwei Monteure eingesetzt. Zusätzlich werden zur Unterstützung jeweils pro Seite vier weiteren Monteure eingesetzt.

Bei der Montage Netz-Tragseile in Ebene 1 oben wird zuerst von der Gerüstwand A zur Gerüstwand B ein Vor-Seil aus Kunststoff überbracht. Danach wird an das Vor-Seil das eine Ende des zu transportierenden Netz-Tragseiles befestigt. Anschließend erfolgt der Transport des Netz-Tragseiles von der Gerüstwand A zur Gerüstwand B. Das eine mit einer Schlaufe versehende Ende des Netz-Tragseiles wird an den vorgesehenen Anschlagpunkt an der Gerüstwand B Befestigt. Das andere Ende des Netz-Tragseiles wird im unterem Bereich an der Gerüstwand A mittels Seilspannklemmen verankert. Das Vor-Seil wird dann zurück, mittels einer Rolle an dem bereits montierten Netz-Tragseil zurück zum Ausgangspunkt an der Gerüstwand A gezogen. Der Transport weiterer Netz-Tragseile, wobei an jedem dritten bis vierten Netz-Tragseil ein Vor-Seil zum Anziehen der Schutznetze montiert ist, erfolgt dann analog im Hin- und Her-Verfahren über eine Rolle. So wird gewährleistet, dass das jeweilige, gezogene Netz-tragseil nicht durchhängt und das sichergestellt, dass sich das Netz-Tragseil nicht verselbständigen kann.

Nach Montage, wird der Durchhang der einzelnen Netz-Tragseile reguliert. Die Montage der Netz-Tragseile auf Ebene 2 unten erfolgt in gleicher Weise wie die Montage der Netz-Tragseile auf Ebene 1 oben. Im Anschluss daran werden Schutznetze angebracht.

Zur Montage der Netze oben werden an der Gerüstwand A zwei Monteure eingesetzt. Zur Unterstützung für die Vorbereitung der Schutznetze werden unten drei Monteure eingesetzt. Zur anschließenden Montage der Netze werden an der Gerüstwand-A, oben zwei Monteure eingesetzt. Zur Unterstützung für die Vorbereitung der Schutznetze werden unten drei Monteure eingesetzt.

Die Schutznetze sind außen, rundum mit alle 1 m angebrachten Sicherheitskarabiner versehen. Mittels dieser werden dann die Schutznetze an den Netz-Tragseilen angebracht. Die Schutznetze werden dann zu den Monteuren nach oben transportiert. Dann erfolgt das Einhängen der Schutznetze an die Netztragseile, wobei die Netze an der Gerüstwand A zuerst bis zu deren vollständigen Montage in einem Ziehharmonikaartigen Zustand hängen. Nach erfolgten Montage, werden die Schutznetze mittels zuvor an den Netztragseilen montierten Vor-Seile auf diesen gleitend zur Gerüstwand B gezogen. Es entsteht somit eine geschlossene Schutznetzfläche.

Zum Abschluß werden die Schutznetze gegen Bewegung auf beiden Gerüstwänden, an den Horizontal-Riegeln verankert. Die Montage der Netze erfolgt dann bei laufendem Verkehr bzw. Betrieb der kreuzenden Hochspannungsleitung. Eventuelle, zum sicheren Ausführen der Demontagearbeiten, erforderliche zu treffende Sicherungsmaßnahmen und Vorkehrungen werden im Vorfeld, jeweils vor Beginn der Montage- und Demontagearbeiten, getroffen.

Die Montage der Schutznetze auf Ebene 2 unten erfolgt in gleicher Weise wie die Montage der Schutznetze auf der Ebene 1 oben.

Die zweite Ausführungsform eines erfindungsgemäßen Schleif- und Schutzgerüsts wird aus Viereckgitterträger aus Winkel- oder Rohrprofilen, beispielsweise aus Notgestängen, Netzeindeckung mit 2 Netz-Ebenen untereinander ausgebildet. Die tragenden Wände des Schutzgerüstes werden in dieser Variante aus eigens dafür produzierten oder in der Art ähnlichen, am Markt zugänglichen Elementen hergestellt, insbesondere nach Art von oder aus Viereckgitterträgen aus Winkelbeziehungsweise Rohrprofilen oder Notgestängen, wie sie von den Herstellern in ihren Produktreihen, wie zum Beispiel von den Notgestänge-Herstellern etc. angeboten werden.

Die Gerüstwand-Konstruktionen werden mit Stahlseilen zur Sicherung gegen Umkippen stabilisiert. Das eine Ende der Steilseile wird oben an der Gerüstwand befestigt. Das andere Ende der Stahlseile wird unten an davor in den Boden eingeschraubten Drehankern aus Stahl befestigt. Sollte es vor Ort aus technischen Gründen (Versorgungsleitungen) das Eindrehen der Schraubanker nicht möglich sein, werden Ballaststeine verwendet an den die Stahlseile unten montiert werden. Ersatzweise können die Ballaststeine nach Vorgaben der Statik innen in die Gerüstwand-Konstruktion angebracht werden.

Zwischen den zuvor erstellten Gerüstwandkonstruktionen (Schutzgerüstabschnitte) werden oben analog zu den gegenüber liegenden Stielen (Stützen) auf zwei Ebenen Netz-Tragseile (aus Stahl oder aus GFK-Material, genannt "Parafilseile") gespannt und deren Enden werden befestigt an den vorgesehenen Stellen in der jeweiligen Gerüstwandkonstruktion. Die Montage der Netz-Tragseile erfolgt im Zuge einer Straßensperrung oder zeitweisen Abschaltung der kreuzenden Hochspannungsleitungen. Zur Montage der Netz-Tragseile werden oben, auf beiden Gerüstwänden (Schutzgerüstabschnitte), i.e. ersten Gerüstwand-A und zweiten Gerüstwand-B jeweils zwei Monteure eingesetzt. Zusätzlich werden zur Unterstützung jeweils pro Seite vier weiteren Monteure eingesetzt.

Bei der Montage des oberen Netzes wird zuerst von der ersten Gerüstwand A zur zweiten Gerüstwand B ein Vor-Seil aus Kunststoff überbracht. Danach wird an das Vor-Seil das eine Ende des zu transportierenden Netz-Tragseiles befestigt. Anschließend erfolgt der Transport des Netz-Tragseiles von der Gerüstwand A zur Gerüstwand B. Das eine mit einer Schlaufe versehende Ende des Netz-Tragseiles wird an den vorgesehenen Anschlagpunkt an der Gerüstwand B Befestigt. Das andere Ende des Netz-Tragseiles wird an vorgesehenen Anschlagpunkt an der Gerüstwand A mittels Seilspannklemmen verankert. Das Vor-Seil wird dann zurück, mittels einer Rolle an dem bereits montierten Netz-Tragseil zurück zum Ausgangspunkt an der Gerüstwand A gezogen. Der Transport weiterer Netz-Tragseile, wobei an jedem dritten bis vierten Netz-Tragseil ein Vor-Seil zum Anziehen der Schutznetze montiert ist, erfolgt dann analog im Hin- und Her-Verfahren über eine Rolle. So wird gewährleistet, dass das jeweilige, gezogene Netz-tragseil nicht durchhängt und dass sich das Netz-Tragseil nicht verselbständigen kann. Nach Montage, wird der Durchhang der einzelnen Netz-Tragseile reguliert.

Die Montage der unteren Netz-Tragseile erfolgt in gleicher Weise wie die Montage der Netz-Tragseile der oberen Netz-Tragseile. Im Anschluss daran werden Schutznetze angebracht.

Zur Montage des oberen Netzes werden an der ersten Gerüstwand A zwei Monteure eingesetzt. Zur Unterstützung für die Vorbereitung der Schutznetze werden unten drei Monteure eingesetzt. Die Schutznetze sind außen, rundum mit im Abstand von etwa 1 m angebrachten Sicherheitskarabiner versehen. Mittels dieser werden dann die Schutznetze an den Netz-Tragseilen angebracht. Die Schutznetze werden dann zu den Monteuren nach oben transportiert. Dann erfolgt das Einhängen der Schutznetze an die Netztragseile, wobei die Netze an der Gerüstwand A zuerst bis zu deren vollständigen Montage in einem Ziehharmonikaartigen Zustand hängen. Nach erfolgten Montage, werden die Schutznetze mittels zuvor an den Netztragseilen montierten Vor-Seile auf diesen gleitend zur Gerüstwand B gezogen. Es entsteht somit eine geschlossene Schutznetzfläche.

Zum Abschluss werden die Schutznetze gegen Bewegung auf beiden Gerüstwänden, an den Horizontal-Riegeln verankert. Die Montage der Netze erfolgt dann bei laufendem Verkehr bzw. Betrieb der kreuzenden Hochspannungsleitung.

Eventuelle, zum sicheren Ausführen der Demontagearbeiten, erforderliche zu treffende Sicherungsmaßnahmen und Vorkehrungen werden im Vorfeld vor Beginn der Demontagearbeiten getroffen.

Die Montage der Schutznetze auf der unteren Ebene erfolgt in gleicher Weise wie die Montage der Schutznetze auf der oberen Ebene.

Die Erfindung hat den Vorteil, dass mittels im Feld einfach durchführbarer Maßnahmen die Stabilität des Schutzgerüstes wesentlich erhöht werden kann, um zukünftigen Anforderungen gerecht zu werden.

## Patentansprüche

1. Schutzgerüst (100), das zum Schutz von Objekten unterhalb einer Stromleitung während Arbeiten an der Stromleitung ausgebildet ist, aufweisend einen ersten Gerüstabschnitt (102) mit
- einer Mehrzahl vertikal angeordnete Stützen (106, 108), die in Längsrichtung des ersten Gerüstabschnittes (102) und Querrichtung des ersten Gerüstabschnittes (102) parallel zueinander und voneinander beabstandet angeordnet sind;
- einer Mehrzahl horizontaler Balken (118, 120), die die vertikalen Stützen (106, 108) verbinden und parallel zueinander und voneinander beabstandet angeordnet sind;
- wobei zumindest ein oberster Balken (122) eine höhere mechanische Festigkeit als die durchschnittliche mechanische Festigkeit der darunterliegenden Balken (118, 120) aufweist;
ferner aufweisend einen zweiten Gerüstabschnitt (104) mit
- einer Mehrzahl vertikal angeordnete Stützen (150, 152), die in Längsrichtung des zweiten Gerüstabschnittes (104) und Querrichtung des zweiten Gerüstabschnittes (104) parallel zueinander und voneinander beabstandet angeordnet sind;
- einer Mehrzahl horizontaler Balken (154, 156, 158, 160, 170, 172), die die vertikalen Stützen (150, 152) verbinden und parallel zueinander und voneinander beabstandet angeordnet sind;
- wobei zumindest ein oberster Balken (174) eine höhere mechanische Festigkeit als die durchschnittliche mechanische Festigkeit der darunterliegenden Balken aufweist;
- wobei der zweite Gerüstabschnitt (104) beabstandet und parallel zum ersten Gerüstabschnitt (102) angeordnet ist, wobei die höhere mechanische Festigkeit und die durchschnittliche mechanische Festigkeit können zumindest das Zugmodul, das Elastizitätsmodul und/oder die Bruchlast umfassen;
- wobei zwischen dem zumindest einen obersten Balken mit höherer mechanischer Festigkeit des ersten Gerüstabschnittes (102) und dem zumindest eine obersten Balken (206) mit höherer mechanischer Festigkeit des zweiten Gerüstabschnittes (104) ist ein erstes Netz (190) vorgespannt wird, und zwischen dem zumindest einen zweit obersten Balken des ersten Gerüstabschnittes (102) und dem zumindest einen zweit obersten Balken (208) des zweiten Gerüstabschnittes (104) ist ein zweites Netz (192) vorgespannt wird.

2. Schutzgerüst (100) nach Anspruch 1, **dadurch gekennzeichnet, dass** die beiden obersten Balken (120, 122, 172, 174) eine höhere mechanische Festigkeit als die durchschnittliche mechanische Festigkeit der darunterliegenden Balken (118, 154, 156, 158, 160, 170) aufweisen.

3. Schutzgerüst (100) nach Anspruch 1 oder 2, **dadurch gekennzeichnet, dass** die höhere mechanische Festigkeit zumindest 25 %, vorzugsweise zumindest 50 %, mehr bevorzugt zumindest 100 %, noch mehr bevorzugt zumindest 200 % höher als die durchschnittliche mechanische Festigkeit ist.

4. Schutzgerüst (100) nach einem der Ansprüche 1 bis 3, **dadurch gekennzeichnet, dass** der zumindest eine Balken (122, 174) mit höherer mechanischer Festigkeit einen größeren Querschnitt als die Balken (118, 120, 154, 156, 158, 160, 170, 172) mit durchschnittlicher mechanischer Festigkeit aufweist.

5. Schutzgerüst (100) nach einem der Ansprüche 1 bis 4, **dadurch gekennzeichnet, dass** der Balken (122, 174) mit einer höheren mechanischen Festigkeit ein verstärkter Rohriegel ist.

6. Schutzgerüst (100) nach einem der Ansprüche 1 bis 5, **gekennzeichnet durch** ein Sicherungsseil (219, 220, 221), das großteils unter dem obersten Balken (122, 174) mit höherer mechanischer Festigkeit angeordnet ist und an den Enden des obersten Balken (122, 174) mit höherer mechanischer Festigkeit befestigt ist und/oder an den Stützen befestigt ist, an denen der oberste Balken (122, 174) mit höherer mechanischer Festigkeit befestigt ist.

7. Schutzgerüst (100) nach einem der Ansprüche 1 bis 6, **dadurch gekennzeichnet, dass** der erste Gerüstabschnitt (202) und der zweite Gerüstabschnitt (204) so angeordnet sich, dass der zumindest eine Balken (122) mit höherer mechanischer Festigkeit des ersten Gerüstabschnittes (202) und der zumindest eine Balken (174) mit höherer mechanischer Festigkeit des zweite Gerüstabschnittes (204) gegenüber angeordnet sind.

## Claims

1. Protective framework (100) adapted to protect objects below a power line during work on the power line, comprising a first framework section (102) with
- a plurality of vertically arranged supports (106, 108) which are arranged parallel to each other and spaced apart from each other in the longitudinal direction of the first framework section (102) and in the transverse direction of the first framework section (102);
- a plurality of horizontal beams (118, 120) connecting the vertical supports (106, 108) and arranged parallel to each other and spaced apart from each other;
- wherein at least one uppermost beam (122) has a higher mechanical strength than the average mechanical strength of the beams (118, 120) below it;
further comprising a second framework section (104) with
- a plurality of vertically arranged supports (150, 152) which are arranged parallel to each other and spaced apart from each other in the longitudinal direction of the second framework section (104) and in the transverse direction of the second framework section (104);
- a plurality of horizontal beams (154, 156, 158, 160, 170, 172) connecting the vertical supports (150, 152) and arranged parallel to each other and spaced apart from each other;
- wherein at least one uppermost beam (174) comprises a higher mechanical strength than the average mechanical strength of the beams below it;
- wherein the second framework section (104) is spaced apart and arranged parallel to the first framework section (102), wherein the higher mechanical strength and the average mechanical strength comprise at least the tensile modulus, the elastic modulus and/or the breaking load;
- wherein a first net (190) is prestressed between the at least one uppermost beam with higher mechanical strength of the first framework section (102) and the at least one uppermost beam (206) with higher mechanical strength of the second framework section (104), **characterized in that** a second net (192) is prestressed between the at least one second uppermost beam of the first framework section (102) and the at least one second uppermost beam (208) of the second framework section (104).

2. Protective framework (100) according to claim 1, **characterized in that** the two uppermost beams (120, 122, 172, 174) comprise a higher mechanical strength than the average mechanical strength of the beams (118, 154, 156, 158, 160, 170) located thereunder.

3. Protective framework (100) according to claim 1 or 2, **characterized in that** the higher mechanical strength is at least 25%, preferably at least 50%, more preferably at least 100%, and even more preferably at least 200% higher than the average mechanical strength.

4. Protective framework (100) according to one of claims 1 to 3, **characterized in that** the at least one beam (122, 174) with higher mechanical strength comprises a larger cross-section than the beams (118, 120, 154, 156, 158, 160, 170, 172) with average mechanical strength.

5. Protective framework (100) according to one of claims 1 to 4, **characterized in that** the beam (122, 174) with higher mechanical strength is a reinforced tubular bar.

6. Protective framework (100) according to one of claims 1 to 5, **characterized by** a safety cable (219, 220, 221) which is arranged largely below the uppermost beam (122, 174) with higher mechanical strength and is fastened to the ends of the uppermost beam (122, 174) with higher mechanical strength and/or is fastened to the supports to which the top beam (122, 174) with higher mechanical strength is fastened.

7. Protective framework (100) according to one of claims 1 to 6, **characterized in that** the first framework section (202) and the second framework section (204) are arranged such that that the at least one beam (122) with higher mechanical strength of the first framework section (202) and the at least one beam (174) with higher mechanical strength of the second framework section (204) are arranged opposite one another.

## Revendications

1. Structure de protection (100) adaptée pour protéger des objets au-dessous d'une ligne d'alimentation électrique pendant une intervention sur la ligne d'alimentation électrique,
comprenant une première section de structure (102) qui est munie de :
- une pluralité de supports agencés verticalement (106, 108) qui sont agencés parallèlement les uns aux autres et qui sont espacés les uns des autres dans la direction longitudinale de la première section de structure (102) et dans la direction transversale de la première section de structure (102) ;
- une pluralité de poutres horizontales (118, 120) qui connectent les supports verticaux/agencés verticalement (106, 108), et qui sont agencées parallèlement les unes aux autres et qui sont espacées les unes des autres ;
- dans laquelle au moins une poutre la plus supérieure (122) présente une résistance mécanique plus élevée que la résistance mécanique moyenne des poutres (118, 120) qui sont au-dessous ;
comprenant en outre une seconde section de structure (104) qui est munie de :
- une pluralité de supports agencés verticalement (150, 152) qui sont agencés parallèlement les uns aux autres et qui sont espacés les uns des autres dans la direction longitudinale de la seconde section de structure (104) et dans la direction transversale de la seconde section de structure (104) ;
- une pluralité de poutres horizontales (154, 156, 158, 160, 170, 172) qui connectent les supports verticaux/agencés verticalement (150, 152), et qui sont agencées parallèlement les unes aux autres et qui sont espacées les unes des autres ;
- dans laquelle au moins une poutre la plus supérieure (174) présente une résistance mécanique plus élevée que la résistance mécanique moyenne des poutres qui sont au-dessous ;
- dans laquelle la seconde section de structure (104) est espacée de la première section de structure (102) et est agencée parallèlement à celle-ci, et dans laquelle la résistance mécanique plus élevée et la résistance mécanique moyenne comprennent au moins le module d'élasticité en traction, le module d'élasticité et/ou la charge de rupture ;
- dans laquelle un premier filet (190) est mis en précontrainte entre l'au moins une poutre la plus supérieure qui présente une résistance mécanique plus élevée de la première section de structure (102) et l'au moins une poutre la plus supérieure (206) qui présente une résistance mécanique plus élevée de la seconde section de structure (104) ;
**caractérisée en ce qu'**un second filet (192) est mis en précontrainte entre l'au moins une seconde poutre la plus supérieure de la première section de structure (102) et l'au moins une seconde poutre la plus supérieure (208) de la seconde section de structure (104).

2. Structure de protection (100) selon la revendication 1, **caractérisée en ce que** les deux poutres les plus supérieures (120, 122, 172, 174) présentent une résistance mécanique plus élevée que la résistance mécanique moyenne des poutres (118, 154, 156, 158, 160, 170) qui sont localisées en dessous.

3. Structure de protection (100) selon la revendication 1 ou 2, **caractérisée en ce que** la résistance mécanique plus élevée est d'au moins 25 %, de préférence d'au moins 50 %, de manière davantage préférable d'au moins 100 % et de manière encore davantage préférable d'au moins 200 % plus élevée que la résistance mécanique moyenne.

4. Structure de protection (100) selon l'une quelconque des revendications 1 à 3, **caractérisée en ce que** l'au moins une poutre (122, 174) qui présente une résistance mécanique plus élevée comprend une section en coupe transversale plus grande que celles des poutres (118, 120, 154, 156, 158, 160, 170, 172) qui présentent une résistance mécanique moyenne.

5. Structure de protection (100) selon l'une quelconque des revendications 1 à 4, **caractérisée en ce que** la poutre (122, 174) qui présente une résistance mécanique plus élevée est une barre tubulaire renforcée.

6. Structure de protection (100) selon l'une quelconque des revendications 1 à 5, **caractérisée par** un câble de sécurité (219, 220, 221) qui est agencé largement au-dessous de la poutre la plus supérieure (122, 174) qui présente une résistance mécanique plus élevée et qui est fixé aux extrémités de la poutre la plus supérieure (122, 174) qui présente une résistance mécanique plus élevée et/ou qui est fixé aux supports auxquels la poutre sommitale/la plus supérieure (122, 174) qui présente une résistance mécanique plus élevée est fixée.

7. Structure de protection (100) selon l'une quelconque des revendications 1 à 6, **caractérisée en ce que** la première section de structure (202) et la seconde section de structure (204) sont agencées de telle sorte que l'au moins une poutre (122) qui présente une résistance mécanique plus élevée de la première section de structure (202) et l'au moins une poutre (174) qui présente une résistance mécanique plus élevée de la seconde section de structure (204) soient agencées à l'opposé l'une de l'autre.
